# EUROPÄISCHE PATENTSCHRIFT

(11) **EP 3 308 044 B1**
(45) Veröffentlichungstag und Bekanntmachung des Hinweises auf die Patenterteilung: **10.08.2022**
(21) Anmeldenummer: 16753243.1
(22) Anmeldetag: 08.06.2016
(51) Int. Cl.: F16C 19/36, F16C 33/64, B21D 53/10, B21D 53/12

(54) **VERFAHREN ZUM FERTIGEN EINES INNENRINGS FÜR EIN KEGELROLLENLAGER SOWIE KEGELROLLENLAGER MIT EINEM INNENRING**
METHOD OF MANUFACTURE THE INNER RING OF A TAPERED ROLLER BEARING AND TAPERED ROLLER BEARING WITH AN INNER RING
PROCÉDÉ DE FABRICATION UNE BAGUE INTÉRIEURE D'UN ROULEMENT À ROULEAUX CONIQUES ET ROULEMENT À ROULEAUX CONIQUES AVEC UNE BAGUE INTÉRIEURE

(30) Priorität: 12.06.2015 DE 102015210764
(43) Veröffentlichungstag der Anmeldung: 18.04.2018
(73) Patentinhaber: Schaeffler Technologies AG & Co. KG, 91074 Herzogenaurach (DE)
(72) Erfinder: KICK-RODENBÜCHER, Reinhard, 90455 Nürnberg (DE); EIDLOTH, Rainer, 91074 Herzogenaurach (DE); MANTAU, Markus, 90618 Puschendorf (DE)
(86) Internationale Anmeldenummer: PCT/DE2016/200267
(87) Internationale Veröffentlichungsnummer: WO 2016/198070

(56) Entgegenhaltungen:
- CN-A- 101 520 071
- DE-A1-102011 005 326
- DE-B3-102005 017 588
- DE-B3-102005 028 093
- JP-A- 2008 296 241
- US-A- 1 727 576

## Beschreibung

Die Erfindung betrifft ein Verfahren zum Fertigen eines Innenrings für ein Kegelrollenlager, wobei der Innenring einen Laufbahnabschnitt und einen Festbordabschnitt aufweist. Die Erfindung betrifft auch ein Kegelrollenlager mit einem Innenring oder mit dem Innenring des Verfahrens.

Kegelrollenlager erlauben es, sowohl radiale Belastungen als auch axiale Belastungen über ein Lager abzuleiten. Kegelrollenlager weisen üblicherweise einen Innenring, einen Außenring sowie eine Mehrzahl von zwischen dem Innenring und dem Außenring angeordnete Kegelrollen auf. Die Kegelrollen sind - wie der Name ausdrückt - in der Form eines Kegelstumpfes ausgebildet, wobei die Kegelmantelfläche die Lauffläche der Wälzkörper bildet.

Zur Führung der Kegelrollen ist meist ein Bord an dem Innenring vorgesehen. Dadurch sind die Lagerringe von Kegelrollenlagern als komplexe Bauteile ausgebildet.

Beispielsweise offenbart die Druckschrift DE 10 2011 00 47 06 A1 ein entsprechendes Kegelrollenlager, wobei ein Innenring des Kegelrollenlagers einen Bord aufweist, der die Kegelrollen in axialer Richtung führt.

Üblicherweise werden die Ringe für die Kegelrollenlager aus einem massiven Halbzeug, insbesondere trennend oder spanend gefertigt.

Die Druckschrift US 288 0495 A1 offenbart eine Hybridfertigung von Ringen für Kegelrollenlager, wobei in einem ersten Fertigungsschritt aus einer flachen Ringscheibe ein Lagerringgrundkörper gefertigt wird und in einem zweiten Schritt die Kontur und insbesondere die Laufbahnen durch Abtragen von Material gebildet werden.

Die gattungsbildende DE 10 2011 005 326 A1 beschreibt ein Verfahren zur Herstellung eines Lagerrings, insbesondere eines Kegelrollen-Lagerrings. Dabei wird eine kreisringförmige Scheibe bereitgestellt und zu einem im Wesentlichen zylindrischen Lagerring umgeformt. Dabei erfolgt das Umformen sowie das Herstellen einer Laufbahn des Lagerrings in einem einzigen Arbeitsschritt durch ein Fließpressen.

Die JP 2008 296241 A offenbart ein Verfahren zur Herstellung von Laufbahnringen für Wälzlager aus einem plattenartigen Rohling. Durch plastische Verformung wird ein Zwischenrohling gebildet, der in einen Rohling für den Innenring und einen Rohling für den Außenring geteilt wird. Es kommen zur Herstellung der Lagerringe Press-, Biege- und Tiefziehschritte zum Einsatz.

Die DE 10 2005 017 588 B3 beschreibt ein Verfahren zur Herstellung mindestens eines Kegelrollenlagerringes. Es erfolgt ein Umformen eines ringförmigen oder scheibenförmigen Blechs, indem der radial innenliegende Teil des Blechs aus der Ebene des Blechs axial tiefgezogen wird. Das Ausformen des Kegelrollenlagerringes erfolgt zumindest im Wesentlichen aus dem axial tiefgezogenen Bereich des Blechs durch Umformen des axial tiefgezogenen Bereichs des Blechs. Anschließende erfolgt ein Abtrennen des zumindest weitgehend fertig ausgeformten Kegelrollenlagerringes von dem nicht axial tiefgezogenen Bereich des Blechs.

Die DE 10 2005 028 093 B3 offenbart ein Verfahren zur gleichzeitigen Herstellung eines Kegelrollenlagerinnenrings und eines Kegelrollenlageraußenrings. Es erfolgt ein Umformen eines ringförmigen oder scheibenförmigen Blechs mit im Wesentlichen konstanter Blechdicke zu einem topfförmigen Körper sowie eine Reihe an Press- und Prägeschritten, bis schließlich ein Trennen des fertiggepressten Kegelrollenlageraußenrings vom fertiggepressten Kegelrollenlagerinnenring erfolgt.

Die US 1 727 576 A beschreibt ein Kegelrollenlager, bei welchem die großen Enden der Kegelrollen sowie der Bord des kegeligen Innenrings, an welchem diese anlaufen, eine konvexe Krümmung aufweisen.

Die CN 101 520 071 A offenbart ein Kegelrollenlager mit konvex ausgebildeten Flächen im Bereich der Laufbahnen, der Mantelflächen der Wälzkörper und eines Bords am Innenring.

Der Erfindung liegt die Aufgabe zugrunde, ein Verfahren zum Fertigen eines Innenrings für ein Kegelrollenlager vorzuschlagen, welches kostengünstig umsetzbar ist, jedoch zugleich zu einer ausreichend hohen Qualität des Innenrings führt.

Diese Aufgabe wird durch ein Verfahren zum Fertigen eines Innenrings für ein Kegelrollenlager mit den Merkmalen des Anspruchs 1 sowie durch ein Kegelrollenlager mit den Merkmalen des Anspruchs 4 gelöst. Bevorzugte oder vorteilhafte Ausführungsformen der Erfindung ergeben sich aus den Unteransprüchen, der nachfolgenden Beschreibung sowie den beigefügten Figuren.

Erster Gegenstand der Erfindung ist somit ein Verfahren zum Fertigen eines Innenrings für ein Kegelrollenlager. Das Kegelrollenlager weist insbesondere einen Innenring, einen Außenring sowie eine Mehrzahl von Kegelrollen auf, wobei die Kegelrollen zwischen dem Außenring und dem Innenring abwälzend angeordnet sind. Die Kegelrollen weisen eine kegelstumpfförmige Form auf. Optional können die Stirnflächen der Kegelrollen plan oder konturiert ausgebildet sein. Die Kegelmantelfläche des Kegelstumpfes der Kegelrollen bildet die Lauffläche der Kegelrollen.

Der Innenring weist einen Laufbahnabschnitt auf, welcher eine Laufbahn, insbesondere Kontaktfläche oder Lauffläche, für die Kegelrollen bildet. Insbesondere rollen die Kegelrollen auf dem Laufbahnabschnitt ab. Der Laufbahnabschnitt bildet eine kegelmantelförmige Laufbahn, insbesondere Kontaktfläche und/oder Lauffläche, für die Kegelrollen aus. Ferner weist der Innenring einen Festbordabschnitt mit einem Festbord auf. Der Festbord dient zum Anlaufen und/oder Abstützen der Kegelrollen über deren Stirnseite.

Das Verfahren umfasst ein Bereitstellen eines Innenringrohlings, wobei der Innenringrohling einen Laufbahnrohabschnitt und einen Festbordrohabschnitt aufweist. Der Festbordrohabschnitt weist einen größeren Außendurchmesser als der Laufbahnrohabschnitt auf. Insbesondere bildet der Festbordrohabschnitt einen Kragen oder einen Flansch, welcher sich an einem Ende des Laufbahnrohabschnitts an diesen anschließt. Der Festbordrohabschnitt ist in einem Längsschnitt entlang der Hauptdrehachse des Innenringrohlings gewinkelt zu dem Laufbahnrohabschnitt angeordnet. Festbordrohabschnitt und Laufbahnrohabschnitt sind einstückig als ein gemeinsames Bauteil ausgebildet.

Der Innenringrohling weist eine Durchgangsöffnung auf. Insbesondere weist die Durchgangsöffnung einen minimalen freien Durchmesser auf, wobei der minimale freie Durchmesser mindestens 50%, vorzugsweise mindestens 80% des minimalen freien Durchmessers des Innenrings entspricht. Insbesondere ist der Innenringrohling hülsenförmig ausgebildet. Somit bildet der Innenringrohling bereits die Grobkontur des später zu fertigenden Innenrings aus. Es ist dabei vorgesehen, dass bereits Material dort platziert ist, wo dieses für einen nachfolgenden Umformschritt benötigt wird, um die Materialverschiebung während des nachfolgenden Umformschrittes möglichst gering zu halten.

In einem weiteren Schritt wird der Innenringrohling in einem Hauptumformschritt umgeformt, sodass der Innenring geformt wird. Hierbei werden der Festbordrohabschnitt in den Festbordabschnitt und der Laufbahnrohabschnitt in den Laufbahnabschnitt überführt. Insbesondere wird in dem Hauptumformschritt die Laufbahn, insbesondere die Kontaktfläche und/oder die Lauffläche, für die Kegelrollen auf dem Laufbahnabschnitt geformt. Insbesondere erfolgt keine formgebende Nachbearbeitung der Laufbahn mehr.

Es ist vorgesehen, dass das insbesondere kalte Umformen in dem Hauptumformschritt durch Fließpressen erfolgt. Beim Fließpressen ist die Temperatur in dem Werkstück, in diesem Fall in dem Innenring und/oder Innenringrohling, niedriger als die Rekristallisationstemperatur des Grundmaterials des Werkstücks.

Insbesondere wird beim Fließpressen der Innenringrohling bei Umgebungs- oder Raumtemperatur, vorzugsweise bei einer Temperatur von < 50 Grad, umgeformt. Während des Umformens ist es jedoch möglich, dass höhere Temperaturen aufgrund der Umformarbeit in dem Innenringrohling beziehungsweise in dem dann entstehenden Innenring auftreten, wobei jedoch auch die höheren Temperaturen unter der Rekristallisationstemperatur des Grundmaterials liegen. Es ist von Vorteil, dass durch das Fließpressen Oberflächenspannungen in dem Innenring im Bereich der Laufbahn, insbesondere Kontaktfläche und/oder Lauffläche, erzeugt werden, die zu einer Leistungssteigerung führen. Zudem ist es von Vorteil, dass das Fertigungsverfahren des Fließpressens gerade bei hohen Stückzahlen sehr kostengünstig durchgeführt werden kann. Insgesamt sind der Innenring und damit das Kegelrollenlager kostengünstig herstellbar und weist gute Funktionseigenschaften auf.

In dem Hauptumformschritt wird der Innenringrohling fließgepresst, sodass der Innenring entsteht. Durch den Hauptumformschritt wird die Kontaktfläche und/oder Lauffläche des Innenrings gebildet, insbesondere geformt. Durch das erfindungsgemäße spanlose Verfahren wird eine Endkontur- oder Endformfertigung (net-shape-manufacturing), im Speziellen von der Laufbahn, insbesondere Kontaktfläche und/oder Lauffläche, ermöglicht. Ferner entfallen ergänzende Arbeitsschritte, wie zum Beispiel das Reinigen von Verzunderungen, welche bei der Warmumformung auftreten können.

Bei einer bevorzugten Weiterbildung der Erfindung umfasst das Verfahren eine Vorformphase, wobei der Innenringrohling mittels Umformen aus einer Kreisringscheibe, insbesondere einer planen Kreisringscheibe, gefertigt wird. Die Kreisringscheibe wird besonders bevorzugt aus einem Metallstreifen ausgetrennt. Das Umformen umfasst ein Umklappen und Fließpressen der Kreisringscheibe. Eine exemplarische Umsetzung der Vorformphase ist in der eingangs zitierten Druckschrift US 2,880,495 gezeigt. Durch das Vorformen kann ein sehr günstiges Halbzeug zum Fertigen des Innenrings eingesetzt werden, sodass das Verfahren weiterhin kostengünstig gehalten wird.

In einer bevorzugten Ausführungsform des Verfahrens wird der Innenring mittels mindestens zwei Fließpressschritten aus der Kreisringscheibe gebildet.

Gemäß der Erfindung weist der Festbordabschnitt eine Anlauffläche für die Kegelrollen des Kegelrollenlagers, insbesondere für die Stirnflächen der Kegelrollen, auf. Die Anlauffläche ist torusballig ausgeformt, wobei die Anlauffläche in dem Hauptumformschritt torusballig geformt wird. Die torusballige Anlauffläche ist dadurch gekennzeichnet, dass diese kreisringförmig ausgebildet ist, jedoch wie ein Donut oder Torus konvex gekrümmt ausgebildet ist. Die Form kann auch als Rettungsring, Reifen oder wulstartig geformte Fläche mit einem Loch bezeichnet werden. Betrachtet man einen Längsschnitt durch den Innenring, so erstreckt sich die Anlauffläche gleichgerichtet zu einer Radialebene, welche senkrecht zu der Hauptdrehachse des Innenrings ausgerichtet ist, über einen Kreisringbereich. Innerhalb dieses Kreisringbereichs weist die torusballige Anlauffläche eine konvexe Erhöhung auf. Durch die torusballige Anlauffläche wird erreicht, dass die Kontaktfläche zwischen der Stirnseite der Kegelrollen und dem Festbordabschnitt verringert ist.

Besonders bevorzugt ist vorgesehen, dass das Kegelrollenlager Kegelrollen aufweist, welche ebenfalls eine torusballige Anlagefläche zur Anlage an die torusballige Anlauffläche des Festbordabschnitts aufweisen. Durch diese doppelte Maßnahme ist die Kontaktfläche besonders gering und dadurch die Reibung in dem Kegelrollenlager minimiert.

Gemäß der Erfindung weist der Innenringrohling einen Bördelbordrohabschnitt und der Innenring einen Bördelbordabschnitt auf, wobei in dem Hauptumformschritt der Bördelbordrohabschnitt in den Bördelbordabschnitt überführt wird, welcher zu einem Bördelbord umgebogen wird. Der Bördelbordabschnitt kann beispielsweise sich in axialer Richtung als hülsenartiger Fortsatz von dem Laufbahnabschnitt erstrecken und in dem Hauptumformschritt oder nachträglich in einem weiteren Umformschritt zu dem Bördelbord umgeformt werden. Durch die Integration des Bördelbords in den Innenring kann dieser besonders kostengünstig hergestellt werden, da letztlich nur das Werkzeug für den Hauptumformschritt einmalig angepasst werden muss.

Ein weiterer Gegenstand der Erfindung betrifft ein Kegelrollenlager mit einem Innenring, wobei der Innenring einen Laufbahnabschnitt und einen Festbordabschnitt aufweist und mit einem Außenring sowie mit einer Mehrzahl von Kegelrollen, wobei die Kegelrollen zwischen dem Außenring und dem Innenring abwälzend angeordnet sind. Erfindungsgemäß ist vorgesehen, dass der Innenring durch das erfindungsgemäße Verfahren, wie dies zuvor beschrieben wurde, mittels Fließpressens in Endkontur spanlos gefertigt ist. Das Kegelrollenlager mit dem Innenring reflektiert somit nochmals die Vorteile des Verfahrens in Form eines Produkts.

Erfindungsgemäß weist der Innenring einen Festbordabschnitt auf, wie dieser zuvor beschrieben wurde. Der Innenring weist zu einem Bördelbord umgebogenen Bördelbordabschnitt auf, wie dieser zuvor beschrieben wurde.

Wie bereits beschrieben ist die Anlauffläche des Festbords torusballig ausgebildet, gegebenenfalls kann auch die Stirnseite der Kegelrollen torusballig ausgebildet sein.

Mit dieser Maßnahme wird die Reibung in dem Kegelrollenlager vermindert.

Bei einer Weiterbildung der Erfindung ist vorgesehen, dass der Außenring mittels Fließpressens in Endkontur spanlos gefertigt ist, wobei ein Innenlaufbahnabschnitt eine Laufbahn, insbesondere eine Kontaktfläche und/oder Lauffläche für die Kegelrollen, bildet. Besonders bevorzugt kann vorgesehen sein, dass der Außenring ähnlich wie der Innenring aus einer Kreisringscheibe zunächst in einer Vorumformphase in einen Außenringrohling und nachfolgend in einem Hauptumformschritt in den Außenring umgeformt wird.

Weitere Merkmale, Vorteile und Wirkungen der Erfindung ergeben sich aus der nachfolgenden Beschreibung eines bevorzugten Ausführungsbeispiels der Erfindung sowie den beigefügten Figuren. Dabei zeigen:
Figur 1 einen schematischen Längsschnitt entlang einer Hauptdrehachse eines Kegelrollenlagers;
Figur 2 eine schematische Illustration zu dem Verfahren zur Fertigung eines Innenrings und optional ergänzend eines Außenrings für das Kegelrollenlager in der Figur 1;
Figuren 3a, b, c unterschiedliche, optionale Details des Innenrings und einer torusballigen Kegelrolle.

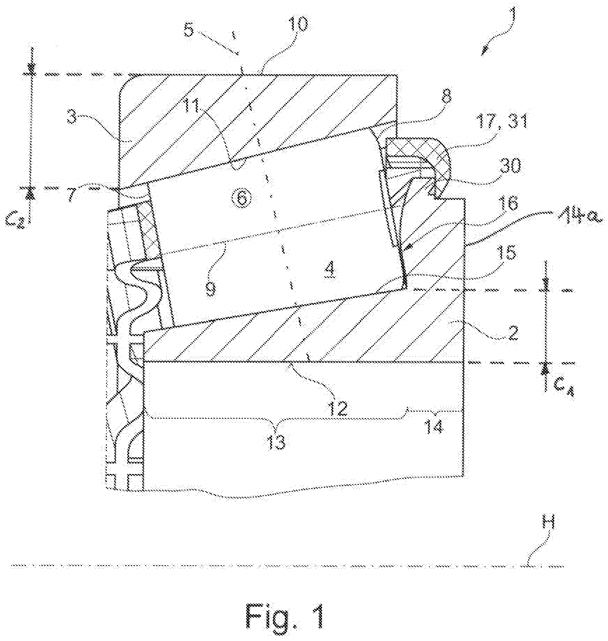

Die Figur 1 zeigt in einem schematischen Längsschnitt ein Kegelrollenlager 1 entlang einer Hauptdrehachse H. Das Kegelrollenlager 1 weist einen - hier nicht erfindungsgemäß ausgestalteten - Innenring 2, einen Außenring 3 sowie mehrere Kegelrollen 4 auf, welche abwälzend zwischen dem Innenring 2 und dem Außenring 3 angeordnet sind. Das Kegelrollenlager 1 ist als ein einreihiges Kegelrollenlager ausgebildet. Das Kegelrollenlager 1 ist insbesondere als ein Radialwälzlager ausgebildet, wobei ein Druckwinkel 5 zwischen 0 und 45 Grad beträgt.

Die Kegelrollen 4 weisen eine kegelstumpfförmige Gestalt mit einer kegelmantelförmigen Lauffläche 6 auf. Ferner weisen die Kegelrollen 4 jeweils eine kleine Stirnseite 7 und eine große Stirnseite 8 auf. Eine Rotationsachse 9 der Kegelrollen 4 ist gegenüber der Hauptdrehachse H geneigt angeordnet.

Der Außenring 3 weist eine zylinderförmige Außenfläche 10 sowie eine kegelförmige, radial nach innen gerichtete Innenlaufbahn 11 für die Kegelrollen 4 auf. Der Außenring 3 ist einstückig gefertigt. Insbesondere ist der Außenring 3 aus Metall, im Speziellen Stahl, gefertigt.

Der Innenring 2 weist eine zylinderförmige Innenfläche 12 auf, welche eine Durchgangsöffnung des Innenrings 2 begrenzt. Die Außenmantelfläche 10 dient zur Anlage in einer ersten Tragstruktur, wie z.B. einer Aufnahme oder Bohrung, die Innenmantelfläche 12 dient zur Anlage an einer zweiten Tragstruktur, wie z.B. einer Achse oder an einer Welle.

Der Innenring 2 ist in axialer Richtung zu der Hauptdrehachse H in einen Laufbahnabschnitt 13 und in einen Festbordabschnitt 14 unterteilt. Der Laufbahnabschnitt 13 bildet eine Laufbahn 15, insbesondere eine Kontaktfläche oder Lauffläche, aus, auf der die Kegelrollen 4 abwälzen. Die Laufbahn 15 ist als eine Außenlaufbahn des Innenrings 2 ausgebildet und weist eine kegelförmige Form auf.

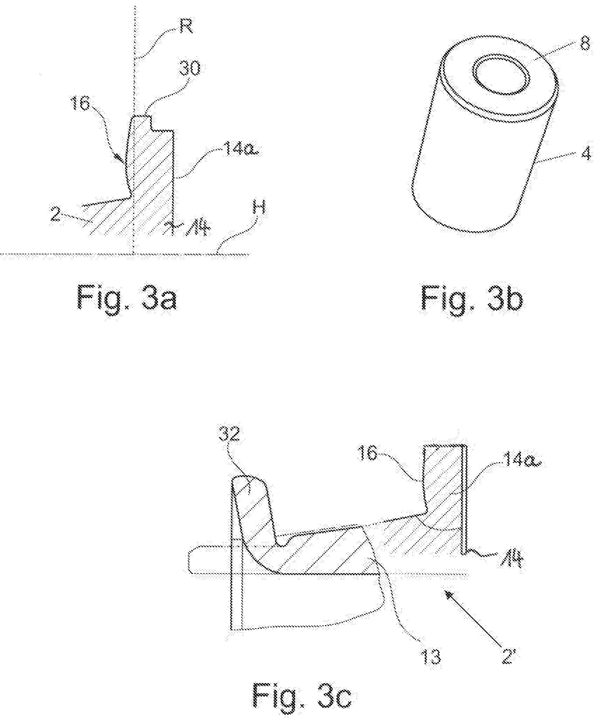

Der Festbordabschnitt 14 weist eine Anlauffläche 16 für die große Stirnseite 8 der Kegelrollen 4 auf. Die Anlauffläche 16 erstreckt sich gewinkelt, senkrecht oder ungefähr senkrecht in dem gezeigten Längsschnitt zu der Kontaktfläche 15. Im gezeigten Längsschnitt weist der Innenring 2 die Form eines liegenden großen L's auf, wobei der liegende Schenkel durch den Laufbahnabschnitt 13 und der davon abstehende Schenkel durch den Festbordabschnitt 14 gebildet ist. Die Kegelrollen 4 sind in einem Käfig 17 angeordnet. Eine erfindungsgemäße Ausführungsform des Innenrings 2' mit Bördelbord 32 zeigt Figur 3c).

Der Innenring 2 und optional ergänzend der Außenring 3 sind spanlos durch Fließpressen in deren Endform gebracht worden. Insbesondere sind die Laufbahn 15 und die Innenlaufbahn 11 durch mindestens einen Fließpressschritt kalt umgeformt.

In dem radial äußeren Bereich des Festbordabschnitts 14 ist ein Haltesteg 30 angeformt, in den der Käfig 17 über Halteorgane 31 eingreifen kann, sodass der Käfig 17 und damit die Kegelrollen 4 gegen ein Wegwandern von der Anlauffläche 16 und/oder dem Festbordabschnitt 14 formschlüssig gesichert sind.

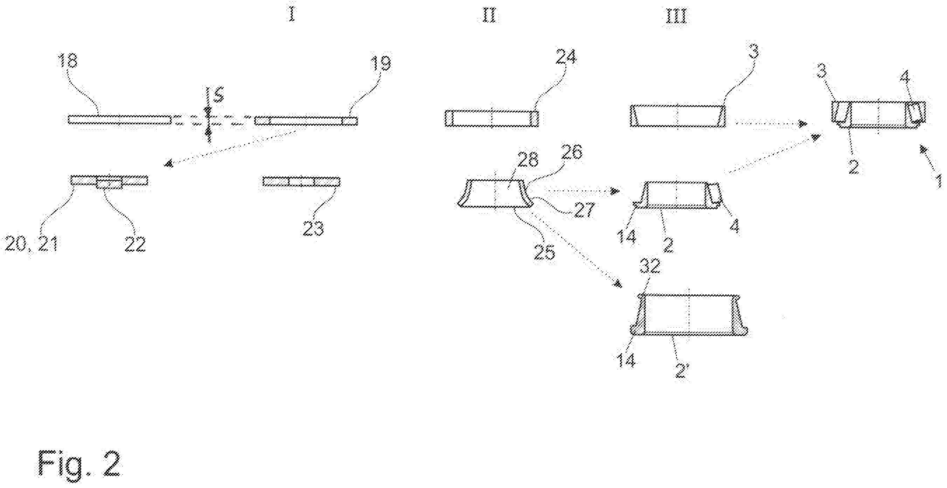

Die Fertigung des Innenrings 2 und des Außenrings 3 wird in der Figur 2 erläutert: Ausgehend von einer Ronde 18, welche aus einem Metallstreifen ausgetrennt wurde, wird eine Kreisringscheibe 19 als Vorprodukt für den Außenring 3 durch ein Austrennen eines Mittelteils 20 gefertigt. Das Mittelteil 20 bildet eine weitere Ronde 21, welche ein Halbzeug für den Innenring 2 ist. Aus der weiteren Ronde 21 wird ein weiteres Mittelteil 22 ausgetrennt, sodass in einem Schritt I eine Kreisringscheibe 19 für den Außenring 3 und eine weitere Kreisringscheibe 23 als Vorprodukt für den Innenring 2 vorliegen. Auf die dargestellte Weise kann die Ronde 18 besonders materialsparend ausgenutzt werden. Alternativ ist es möglich, statt des Mittelteils 20 einen anderen Bereich des Metallstreifens zu verwenden.

In einer Vorumformphase in einem Schritt II wird die Kreisringscheibe 19 in einen Außenringrohling 24 umgeformt, wobei der Außenringrohling 24 die Form einer Hülse aufweist. Der Schritt II ist insbesondere ein Umklappen der Kreisringscheibe 19. Die weitere Kreisringscheibe 23 wird in dem Schritt II in einen Innenringrohling 25 umgeformt, wobei der Innenringrohling 25 jedoch bereits als eine konturierte Hülse ausgebildet ist. Der Schritt II umfasst insbesondere ein Umklappen und Fließpressen der weiteren Kreisringscheibe 23. Der Vorumformschritt ist als ein Fließpressen ausgebildet, wobei eine Temperatur des Außenringrohlings 24 und des Innenringrohlings 25 stets unter der Rekristallisationstemperatur des Grundmaterials liegt.

Der Innenringrohling 25 weist einen Laufbahnrohabschnitt 26 und einen Festbordrohabschnitt 27 auf. Wie sich aus der Figur 2 ergibt, ist der Außendurchmesser des Festbordrohabschnitts 27 größer als der Außendurchmesser des Laufbahnrohabschnitts 26. In der Gesamtheit ist der Innenringrohling 25 als eine sich stetig im Außendurchmesser und Innendurchmesser in einer axialen Richtung größer werdende Hülse ausgebildet. Der Innenringrohling 25 weist eine Durchgangsöffnung 28 auf, welche später in dem Innenring 2 die Durchgangsöffnung mit der zylinderförmigen Innenfläche 12 bildet.

Der Laufbahnrohabschnitt 26 ist sowohl an der Innenfläche als auch an der Außenfläche des Innenringrohlings 25 jeweils als eine Kegelmantelabschnittsfläche ausgebildet.

In einem Schritt III erfolgt ein Hauptumformschritt, wobei jeweils mittels Fließpressens der Außenringrohling 24 in den Außenring 3 und der Innenringrohling 25 in den Innenring 2 oder alternativ in den erfindungsgemäßen Innenring 2' mit Bördelbord 32 (vergleiche Fig. 3c) geformt wird. Dabei kann der Bördelbord 32 vor oder nach einem Zusammenführen des Innenrings 2' mit den Kegelrollen 4 ausgebildet werden. Es ist dabei hervorzuheben, dass der Laufbahnrohabschnitt 26 in den Laufbahnabschnitt 13 derart überführt wird, dass durch den Hauptumformschritt bereits die Laufbahn 15 gebildet ist. In gleicher Weise wird durch den Hauptumformschritt bzw. Schritt III bereits die Innenlaufbahn 11 des Außenrings 3 gebildet.

Obwohl in der Figur 2 die Verfahren zur Fertigung des Innenrings 2 und des Außenrings 3 parallel dargestellt sind, können diese auch zeitlich hintereinander, abwechselnd oder in beliebiger Reihenfolge zueinander durchgeführt werden.

In der Figur 3a ist der Festbordabschnitt 14 des Innenrings 2 als eine Detailvergrößerung dargestellt. Es ist zu erkennen, dass die Anlauffläche 16 torusballig ausgeführt ist, sodass im Vergleich zu einer Radialebene R in Bezug auf die Hauptdrehachse H ein balliger Kreisringbereich gebildet ist, welcher im Mittelteil des Kreisringbereichs ein Maximum aufweist.

In dem nicht erfindungsgemäßen Beispiel in der Figur 3a ohne einen Bördelbord 32 ist an dem radial äußeren Bereich des Festbordabschnitts 14 der Haltesteg 30 angeformt, in den der Käfig 17 über Halteorgane 31 (Figur 1) eingreifen kann, sodass der Käfig 17 und damit die Kegelrollen 4 gegen ein Wegwandern von der Anlauffläche 16 und/oder dem Festbordabschnitt 14 formschlüssig gesichert sind.

Figur 3b zeigt eine dreidimensionale Ansicht einer Kegelrolle 4. Die große Stirnseite 8 der Kegelrolle 4 ist torusballig ausgeführt, sodass ein Kontaktbereich zwischen der großen Stirnseite 8 der Kegelrolle 4 und der Anlauffläche 16 minimiert und damit reibungsarm ausgestaltet ist.

In der Figur 3c ist dagegen ein Festbordabschnitt 14 eines erfindungsgemäßen Innenrings 2' gezeigt, welcher den Haltesteg 30 nicht aufweist. Stattdessen ist bei dem weiteren Innenring 2' erfindungsgemäß ein Bördelbord 32 vorgesehen, welcher durch den Hauptumformschritt und/oder den Schritt III mit gefertigt wird und zwar als axiale Verlängerung des Laufbahnabschnitts 13. In einem nachfolgenden Fertigungs- und/oder Montageschritt wird die Verlängerung als Bördelbord 32 umgebogen.

### Bezugszeichenliste

- 1: Kegelrollenlager
- 2,2': Innenring
- 3: Außenring
- 4: Kegelrollen
- 5: Druckwinkel
- 6: Lauffläche
- 7: kleine Stirnseite
- 8: große Stirnseite
- 9: Rotationsachse
- 10: zylindermantelförmige Außenfläche
- 11: kegelförmige Innenlaufbahn
- 12: zylinderförmige Innenfläche
- 13: Laufbahnabschnitt
- 14: Festbordabschnitt
- 15: Laufbahn
- 16: Anlauffläche
- 17: Käfig
- 18: Ronde
- 19: Kreisringscheibe
- 20: Mittelteil
- 21: Ronde
- 22: Mittelteil
- 23: Kreisringscheibe
- 24: Außenringrohling
- 25: Innenringrohling
- 26: Laufbahnrohabschnitt
- 27: Festbordrohabschnitt
- 28: Durchgangsöffnung
- 30: Haltesteg
- 31: Halteorgane
- 32: Bördelbord
- H: Hauptdrehachse
- R: Radialebene

## Patentansprüche

1. Verfahren zum spanlosen Fertigen eines Innenrings (2,2') in Endkontur für ein Kegelrollenlager (1), wobei der Innenring (2) einen Laufbahnabschnitt (13) und einen Festbordabschnitt (14) aufweist, umfassend die Schritte:
Bereitstellen eines Innenringrohlings (25), wobei der Innenringrohling (25) einen Laufbahnrohabschnitt (26) und einen Festbordrohabschnitt (27) aufweist, wobei der Festbordrohabschnitt (27) einen größeren Außendurchmesser als der Laufbahnrohabschnitt (26) aufweist und wobei der Innenringrohling (25) eine Durchgangsöffnung (28) aufweist,
Umformen des Innenringrohlings (25) in den Innenring (2,2') mittels Fließpressens in einem Hauptumformschritt (III), wobei der Festbordrohabschnitt (27) in den Festbordabschnitt (14) und der Laufbahnrohabschnitt (26) in den Laufbahnabschnitt (13) überführt werden,
**dadurch gekennzeichnet, dass**
der Festbordabschnitt (14) einen Festbord (14a) mit einer Anlauffläche (16) für Kegelrollen (4) des Kegelrollenlagers (1) aufweist, wobei die Anlauffläche (16) in dem Hauptumformschritt (III) torusballig geformt wird, und
dass der Innenringrohling (25) einen Bördelbordrohabschnitt und der Innenring (2) einen Bördelbordabschnitt aufweist, wobei in dem Hauptumformschritt (III) der Bördelbordrohabschnitt in den Bördelbordabschnitt überführt wird, welcher zu einem Bördelbord (32) umgebogen wird.

2. Verfahren nach Anspruch 1, **dadurch gekennzeichnet, dass** der Innenringrohling (25) in einer Vorumformphase (II) mittels Fließpressens aus einer Kreisringscheibe (23) gefertigt ist.

3. Verfahren nach Anspruch 1 oder 2, **dadurch gekennzeichnet, dass** der Innenring (2,2') mittels mindestens zwei Fließpressschritten (II, III) aus der Kreisringscheibe (23) gebildet wird.

4. Kegelrollenlager (1) mit einem Innenring (2,2'), wobei der Innenring (2,2') einen Laufbahnabschnitt (13) und einen Festbordabschnitt (14) aufweist, und mit einem Außenring (3) sowie mit einer Mehrzahl von Kegelrollen (4), wobei die Kegelrollen (4) zwischen dem Außenring (3) und dem Innenring (2,2') abwälzend angeordnet sind, **dadurch gekennzeichnet, dass**
der Innenring (2,2') durch das Verfahren nach einem der vorhergehenden Ansprüche mittels Fließpressens in Endkontur spanlos geformt ist, wobei der Innenring (2,2') einen Festbordabschnitt (14) aufweist, der einen Festbord (14a) mit einer torusbaligen Anlauffläche (16) für die Kegelrollen (4) aufweist und
wobei der Innenring (2') einen Bördelbord (32) aufweist, wobei der Bördelbord (32) in radialer Richtung von dem Laufbahnabschnitt (13) absteht und die Kegelrollen (4) in axialer Richtung sichert.

5. Kegelrollenlager (1) nach Anspruch 4, **dadurch gekennzeichnet, dass** die Kegelrollen (4) eine torusballige Stirnseite zum Anlauf an die torusballige Anlauffläche (16) aufweisen.

6. Kegelrollenlager (1) nach einem Ansprüche 4 oder 5, **dadurch gekennzeichnet, dass** der Außenring (3) mittels Fließpressens in Endkontur spanlos gefertigt ist, wobei eine kegelförmige Innenlaufbahn (11) geformt ist.

## Claims

1. A method for the non-cutting manufacture of an inner ring (2, 2') in the final contour for a tapered roller bearing (1), wherein the inner ring (2) has a raceway portion (13) and a fixed edge portion (14), comprising the steps of:
providing an inner ring blank (25), wherein the inner ring blank (25) has an unfinished raceway portion (26) and a fixed edge blank portion (27), wherein the fixed edge blank portion (27) has a larger outside diameter than the unfinished raceway portion (26) and wherein the inner ring blank (25) has a through-opening (28),
forming the inner ring blank (25) into the inner ring (2, 2') by means of extrusion in a main forming step (III), wherein the unfinished fixed edge portion (27) is transformed into the fixed edge portion (14) and the unfinished raceway portion (26) is transformed into the raceway portion (13), **characterised in that** the fixed edge portion (14) has a fixed edge (14a) with a contact surface (16) for tapered rollers (4) of the tapered roller bearing (1), wherein the contact surface (16) is toroidal in the main forming step (III), and **in that** the inner ring blank (25) has an unfinished flanged edge portion and the inner ring (2) has a flanged edge portion, wherein in the main forming step (III) the unfinished flanged edge portion is converted into the flanged edge portion, which is bent to form a flanged edge (32).

2. The method according to claim 1, **characterised in that** the inner ring blank (25) is manufactured in a preforming phase (II) by means of extrusion from a circular ring disc (23).

3. The method according to claim 1 or 2, **characterised in that** the inner ring (2, 2') is formed from the circular ring disc (23) by means of at least two extrusion steps (II, III).

4. A tapered roller bearing (1) with an inner ring (2, 2'), wherein the inner ring (2,2') has a raceway portion (13) and a fixed edge portion (14), and an outer ring (3) and a plurality of tapered rollers (4), wherein the tapered rollers (4) are arranged to roll between the outer ring (3) and the inner ring (2,2'), **characterised in that**
the inner ring (2,2') is shaped without cutting into the final contour by means of the method according to any one of the preceding claims by means of extrusion, wherein the inner ring (2,2') has a fixed edge portion (14) which has a fixed edge (14a) with a toroidal contact surface (16) for the tapered rollers (4) and
the inner ring (2') has a flanged edge (32), wherein the flanged edge (32) projects in the radial direction from the raceway portion (13) and secures the tapered rollers (4) in the axial direction.

5. The tapered roller bearing (1) according to claim 4, **characterised in that** the tapered rollers (4) have a toroidal end face for contact with the toroidal contact surface (16).

6. The tapered roller bearing (1) according to any one of claims 4 or 5, **characterised in that** the outer ring (3) is manufactured without cutting into the final contour by means of extrusion, wherein a conical inner raceway (11) is formed.

## Revendications

1. Procédé de fabrication sans enlèvement de copeaux d'une bague intérieure (2, 2') dans le contour final d'un roulement à rouleaux coniques (1), la bague intérieure (2) présentant une section de chemin de roulement (13) et une section de bord fixe (14), comprenant les étapes consistant à :
fournir une ébauche de bague intérieure (25), l'ébauche de bague intérieure (25) présentant une section brute de chemin de roulement (26) et une section brute de bord fixe (27), la section brute de bord fixe (27) présentant un diamètre extérieur supérieur à celui de la section brute de chemin de roulement (26) et l'ébauche de bague intérieure (25) présentant une ouverture traversante (28),
transformer l'ébauche de bague intérieure (25) en la bague intérieure (2, 2') par filage au cours d'une étape de formage principal (III), la section brute de bord fixe (27) étant transformée en la section de bord fixe (14) et la section brute de chemin de roulement (26) étant transformée en la section de chemin de roulement (13), **caractérisé en ce que** la section de bord fixe (14) présente un bord fixe (14a) avec une surface de contact (16) pour des rouleaux coniques (4) du roulement à rouleaux coniques (1), la surface de contact (16) étant gauchie au cours de l'étape de formage principal (III), et **en ce que** l'ébauche de bague intérieure (25) présente une section brute de bord à bord relevé et la bague intérieure (2) présente une section de bord à bord relevé, au cours de l'étape de formage principal (III), la section brute de bord à bord relevé étant transformée en section de bord à bord relevé qui est cintrée pour former un bord à bord relevé (32).

2. Procédé selon la revendication 1, **caractérisé en ce que** l'ébauche de bague intérieure (25) est fabriquée dans une phase de préformage (II) par filage à partir d'un disque annulaire circulaire (23).

3. Procédé selon la revendication 1 ou 2, **caractérisé en ce que** la bague intérieure (2, 2') est formée à partir du disque annulaire circulaire (23) au moyen d'au moins deux étapes de filage (II, III).

4. Roulement à rouleaux coniques (1) avec une bague intérieure (2, 2'), la bague intérieure (2, 2') présentant une section de chemin de roulement (13) et une section de bord fixe (14), et avec une bague extérieure (3) et avec une pluralité de rouleaux coniques (4), dans lequel les rouleaux coniques (4) sont agencés pour rouler entre la bague extérieure (3) et la bague intérieure (2, 2'), **caractérisé en ce que**
la bague intérieure (2, 2') est mise en forme sans enlèvement de copeaux dans le contour final par filage selon le procédé selon l'une quelconque des revendications précédentes, la bague intérieure (2, 2') présentant une section de bord fixe (14) qui a un bord fixe (14a) avec une surface de contact (16) gauchie pour les rouleaux coniques (4) et
la bague intérieure (2') présentant un bord à bord relevé (32), le bord à bord relevé (32) faisant saillie dans la direction radiale depuis la section de chemin de roulement (13) et fixant les rouleaux coniques (4) dans la direction axiale.

5. Roulement à rouleaux coniques (1) selon la revendication 4, **caractérisé en ce que** les rouleaux coniques (4) ont une face frontale gauchie pour le contact avec la surface de contact (16) gauchie.

6. Roulement à rouleaux coniques (1) selon l'une quelconque des revendications 4 ou 5, **caractérisé en ce que** la bague extérieure (3) est fabriquée sans enlèvement de copeaux dans le contour final par filage, avec formation d'un chemin de roulement intérieur conique (11).
